# FASCICULE DE BREVET EUROPEEN

(11) **EP 0 812 876 B1**
(45) Date de publication et mention de la délivrance du brevet: **14.04.2004**
(21) Numéro de dépôt: 97109494.1
(22) Date de dépôt: 11.06.1997
(51) Int. Cl.: C08J 7/06, B60S 1/38

(54) **Procédé de fabrication d'un profilé en caoutchouc à friction superficielle réduite**
Verfahren zur Herstellung eines Gummiprofils mit verringerter Oberflächenreibung
Process of producing rubber profiles of reduced surface friction

(30) Priorité: 13.06.1996 FR 9607333
(43) Date de publication de la demande: 17.12.1997
(73) Titulaire: VALEO SYSTEMES D'ESSUYAGE, 78321 La Verrière (FR)
(72) Inventeur: Desormiere, Sophie, 95500 Gonesse (FR); Oulie, Michel, 63500 Issoire (FR)
(74) Mandataire: Gamonal, Didier

(56) Documents cités:
- EP-A- 0 562 191
- US-A- 5 447 645
- PATENT ABSTRACTS OF JAPAN vol. 007, no. 122 (C-168), 26 Mai 1983 & JP 58 042624 A (TOYODA GOSEI KK), 12 Mars 1983,
- DATABASE WPI Section Ch, Week 8240 Derwent Publications Ltd., London, GB; Class A18, AN 82-84795E XP002026955 & JP 57 140 159 A (TOYODA GOSEI KK) , 30 Août 1982
- DATABASE WPI Section Ch, Week 8501 Derwent Publications Ltd., London, GB; Class A32, AN 85-002674 XP002026956 & JP 59 201 838 A (TOYODA GOSEI KK) , 15 Novembre 1984
- DATABASE WPI Section Ch, Week 7913 Derwent Publications Ltd., London, GB; Class A35, AN 79-24560B XP002026957 & JP 54 022 482 A (NIPPON OIL SEAL IND) , 20 Février 1979

## Description

L'invention concerne un procédé de fabrication d'un profilé réalisé en caoutchouc ou en élastomère, naturel ou synthétique, vulcanisé et comportant une couche superficielle destinée à réduire le coefficient de frottement entre ce profilé et une surface vitrée ainsi qu'une lame d'essuyage d'un essuie-glace de véhicule automobile obtenue par un tel procédé.

Selon une technique connue, un tel profilé, par exemple une lame d'essuyage d'essuie-glace de véhicule automobile, est revêtu d'un revêtement lubrifiant qui est obtenu par immersion de la lame d'essuyage dans une solution dans laquelle est dispersée une poudre, notamment de graphite, ou pulvérisation de cette solution sur le profilé.

Selon cette technique connue, la formation du revêtement lubrifiant est obtenue par immersion de la lame dans une solution essentiellement constituée par un liant à base de résine acrylique dans lequel est dispersée la poudre de graphite, ou pulvérisation de cette solution sur le profilé.

Après immersion, on fait sécher la lame d'essuyage de manière à obtenir la formation d'une couche superficielle conférant à la lame d'essuyage des propriétés permettant d'améliorer de manière importante la qualité de l'essuyage.

Un tel revêtement, s'il permet d'améliorer la qualité de l'essuyage, a pour inconvénient d'être particulièrement fragile en ce qu'il est notamment très peu résistant aux détergents et aux lessives qui sont notamment utilisés pour le lavage des véhicules.

On constate ainsi une très faible durée de vie du revêtement lubrifiant qui aboutit rapidement à sa détérioration, voire à sa disparition complète, nuisant alors de manière importante à la qualité de l'essuyage.

L'invention a pour but de proposer un nouveau procédé pour former la couche superficielle qui remédie aux inconvénients qui viennent d'être mentionnés.

Dans ce but, l'invention propose un procédé de fabrication d'un profilé, caractérisé en ce que l'étape de formation de la couche est effectuée au cours de la vulcanisation du profilé.

La solution utilisée est essentiellement constituée par un solvant dans lequel est dispersée la poudre qui est de préférence une poudre de graphite cristallin dont les dimensions des particules qui la constituent sont de préférence compris entre 1 et 10 microns.

En procédant conformément aux enseignements de l'invention, le solvant dans lequel est immergé le profilé, ou qui est pulvérisé sur le profilé, en cours de réticulation provoque un phénomène de "gonflement" du caoutchouc ou de l'élastomère, à la manière d'une éponge, dont les cavités ainsi dilatées se remplissent des particules qui constituent la poudre de lubrification.

Ce profilé peut être, à titre d'exemple non limitatif, une lame d'essuyage d'essuie-glace pour véhicule automobile.

Après évaporation du solvant, lors de la fin de la vulcanisation, ou au cours d'une étape intermédiaire de séchage intervenant entre l'immersion du profilé dans la solution, ou pulvérisation sur le profilé de la solution, et la fin de la vulcanisation, le solvant s'évapore et les particules de la poudre sont "piégées" dans les alvéoles de surface pour constituer ainsi une couche superficielle dopée en poudre sur une profondeur d' 6 à 12 microns.

L'immersion peut être effectuée en plongeant le profilé dans un bain liquide de solution ou dans un brouillard de solution.

L'étape d'immersion ou de pulvérisation du profilé est de préférence effectuée alors que le taux de réticulation du caoutchouc de l'élastomère est inférieur à 80%.

De préférence, on choisit une phase du procédé de vulcanisation au cours de laquelle le taux de réticulation du caoutchouc ou de l'élastomère est croissant de manière continue et compris entre 10 et 80%.

Le solvant peut être de différents types et appartenir par exemple à la famille des alcanes, des alcènes, des composés aromatiques ou aliphatiques.

L'immersion du profilé dans la solution ou la pulvérisation de la solution sur le profilé peut être effectuée en une seule fois ou sous la forme de plusieurs immersions ou pulvérisations successives dans des solutions à base de solvants identiques ou différents et comportant des poudres de lubrification de compositions différentes et/ou de tailles de grain identiques ou différentes.

La poudre est de préférence une poudre de graphite mais elle peut être remplacée ou complétée par une poudre de polytétrafluoroéthylène ou de bisulfure de molybdène.

Le procédé selon l'invention permet de réaliser une couche superficielle présentant une très grande résistance et qui est de plus hydrophobe.

Le graphitage des profilés, tels que des lames d'essuyage d'essuie-glace de véhicules automobiles, selon le procédé de dopage de la couche superficielle conforme aux enseignements de l'invention est de plus particulièrement avantageux en ce qu'il est réalisé avant séparation par découpe de deux lames d'essuyage lorsque celles-ci sont extrudées simultanément et reliées entre elles par leur bord d'essuyage respectif, ce bord ultérieurement découpé n'étant ainsi pas muni de couche superficielle dopée en agent lubrifiant, ce qui facilite le phénomène de retournement de la lame d'essuyage lors du mouvement de balayage alterné de l'essuie-glace.

Conformément à un autre aspect de l'invention, le procédé selon l'invention peut être complété par une étape finale, après vulcanisation complète du caoutchouc ou de l'élastomère, de brossage du profilé comportant sa couche superficielle.

Le brossage est par exemple effectué en faisant passer longitudinalement le profilé entre deux brosses tournantes adjacentes.

Les brosses tournent en sens inverse l'une de l'autre et de préférence dans le sens opposé à la direction d'avancement du profilé entre les brosses.

L'étape complémentaire de brossage permet d'homogénéiser le revêtement déposé sur la surface du profilé et d'éviter que ce revêtement présente des défauts d'aspect ou des irrégularités dans son épaisseur ou des défauts d'adhérence.

Il est en effet souhaitable de supprimer ces défauts qui, s'ils subsistent, risquent de provoquer, dans le cas d'une lame d'essuie-glace, des stries lors de l'essuyage ou d'aboutir à des dépôts localisés de graphite sur la vitre.

Le brossage permet ainsi de supprimer les excès de graphite, d'éliminer les particules de graphite qui adhèrent mal au profilé et d'homogénéiser les particules de graphite en orientant les lamelles dans le même sens. Le brossage permet aussi de détecter la présence du revêtement car le brossage provoque un changement de l'aspect apparent du revêtement qui passe de la couleur noir mat à une teinte gris métallisé.

Les brosses peuvent être remplacées par des galets de "brossage" qui sont par exemple réalisés en feutre ou en matériau alvéolaire, les galets présentant des profils complémentaires de celui du profilé à brosser.

A titre de variante, le brossage peut être remplacé par une opération équivalente résultant de la projection à haute pression de jets d'eau sur le profilé revêtu.

## Revendications

1. Procédé de fabrication d'un profilé, réalisé en caoutchouc ou en élastomère, vulcanisé et comportant une couche superficielle, destinée à réduire le coefficient de frottement entre le profilé et une surface vitrée, dont la formation est obtenue par immersion du profilé dans une solution dans laquelle est dispersée une poudre, notamment de graphite cristallin, ou par pulvérisation de cette solution sur ce profilé, **caractérisé en ce que** l'étape de formation de la couche est effectuée au cours de la vulcanisation du profilé.

2. Procédé selon la revendication 1, **caractérisé en ce que** l'étape de formation de la couche est effectuée avant que le taux de réticulation du caoutchouc ou de l'élastomère ne soit supérieur à 80%.

3. Procédé selon la revendication 2, **caractérisé en ce que** l'étape de formation de la couche est effectuée lorsque le taux de réticulation du caoutchouc ou de l'élastomère est croissant et est compris entre 10 et 80%.

4. Procédé selon l'une quelconque des revendications précédentes, **caractérisé en ce que** l'étape de formation de la couche est obtenue par immersion du profilé dans une solution comportant une poudre dispersée dans un solvant.

5. Procédé selon l'une des revendications 1 à 3, **caractérisé en ce que** l'étape de formation de la couche est obtenue par pulvérisation sur le profilé d'une solution comportant une poudre dispersée dans un solvant.

6. Procédé selon la revendication 4 ou 5, **caractérisé en ce que** la poudre est composée de particules dont les dimensions sont comprises entre 1 et 10 microns.

7. Procédé selon l'une des revendications 4 à 6, **caractérisé en ce qu'**il comporte une étape intermédiaire d'évaporation du solvant par séchage avant la fin de la vulcanisation du profilé.

8. Procédé selon l'une quelconque des revendications précédentes, **caractérisé en ce que**, après la vulcanisation complète du profilé, on procède à un brossage du profilé.

9. Procédé selon la revendication 8, **caractérisé en ce que** le brossage est effectué en faisant passer longitudinalement le profilé entre deux brosses adjacentes et tournant en sens inverse l'une de l'autre.

10. Procédé selon la revendication 9, **caractérisé en ce que** les brosses tournent dans le sens opposé à la direction d'avancement du profilé entre les brosses.

11. Procédé selon la revendication 8, **caractérisé en ce que** le brossage est effectué en faisant passer le profilé entre deux galets présentant des profils complémentaires de celui du profilé à brosser.

12. Procédé selon la revendication 8, **caractérisé en ce que** le brossage est effectué en projetant sur le profilé des jets d'eau sous haute pression.

## Claims

1. A method of manufacturing a profiled section, produced from rubber or elastomer, vulcanised and comprising a surface layer, intended to reduce the coefficient of friction between the profiled section and a glazed surface, whose formation is obtained by the immersion of the profiled section in a solution in which a powder is dispersed, in particular crystalline graphite, or by spraying this solution onto this profiled section, **characterised in that** the step of forming the layer is performed during the vulcanisation of the profiled section.

2. A method according to Claim 1, **characterised in that** the step of forming the layer is performed before the degree of cross-linking of the rubber or elastomer is greater than 80%.

3. A method according to Claim 2, **characterised in that** the step of forming the layer is performed when the degree of cross-linking of the rubber or elastomer is increasing and is between 10% and 80%.

4. A method according to any one of the preceding claims, **characterised in that** the step of forming the layer is obtained by immersing the profiled section in a solution comprising a powder dispersed in a solvent.

5. A method according to one of Claims 1 to 3, **characterised in that** the step of forming the layer is obtained by spraying onto the profiled section a solution comprising a powder dispersed in a solvent.

6. A method according to Claim 4 or 5, **characterised in that** the powder is composed of particles whose dimensions are between 1 and 10 microns.

7. A method according to one of Claims 4 to 6, **characterised in that** it comprises an intermediate step of evaporating the solvent by drying before the end of vulcanisation of the profiled section.

8. A method according to any one of the preceding claims, **characterised in that**, after the complete vulcanisation of the profiled section, the profiled section is brushed.

9. A method according to Claim 8, **characterised in that** the brushing is carried out by making the profiled section pass longitudinally between two adjacent brushes rotating in opposite directions to each other.

10. A method according to Claim 9, **characterised in that** the brushes rotate in the opposite direction to the direction of travel of the profiled section between the brushes.

11. A method according to Claim 8, **characterised in that** the brushing is carried out by making the profiled section pass between two rollers having profiles complementary to that of the profiled section to be brushed.

12. A method according to Claim 8, **characterised in that** the brushing is carried out by spraying jets of water onto the profiled section under high pressure.

## Patentansprüche

1. Herstellungsverfahren eines Profils aus Gummi oder Elastomer, vulkanisiert, das eine Oberflächenschicht aufweist, die den Reibungskoeffizienten zwischen diesem Profil und einer Glasfläche reduzieren soll, und deren Bildung durch Eintauchen des Profils in eine Lösung erhalten wird, in der ein Pulver, insbesondere ein kristallines Graphitpulver, dispergiert wird, oder durch Zerstäubung dieser Lösung auf das Profil, **dadurch gekennzeichnet, dass** der Bildungsschritt der Schicht während der Vulkanisierung des Profils erfolgt.

2. Verfahren nach Anspruch 1, **dadurch gekennzeichnet, dass** der Bildungsschritt der Schicht erfolgt, bevor der Vernetzungsgrad des Gummis oder des Elastomers 80% überschreitet.

3. Verfahren nach Anspruch 2, **dadurch gekennzeichnet, dass** der Bildungsschritt der Schicht erfolgt während der Vernetzungsgrad des Gummis oder des Elastomers ansteigt und zwischen 10 und 80% beträgt.

4. Verfahren nach einem der vorangehenden Ansprüche, **dadurch gekennzeichnet, dass** der Bildungsschritt der Schicht durch Eintauchen des Profils in eine Lösung erfolgt, die ein in einem Lösemittel dispergiertes Pulver enthält.

5. Verfahren nach einem der Ansprüche 1 bis 3, **dadurch gekennzeichnet, dass** der Bildungsschritt der Schicht durch Zerstäuben auf das Profil einer Lösung erfolgt, die ein in einem Lösemittel dispergiertes Pulver enthält.

6. Verfahren nach Anspruch 4 oder 5, **dadurch gekennzeichnet, dass** das Pulver aus Partikeln besteht, deren Größe zwischen 1 und 10 Mikron beträgt.

7. Verfahren nach einem der Ansprüche 4 bis 6, **dadurch gekennzeichnet, dass** es einen Zwischenschritt der Verdampfung des Lösemittels durch Trocknen vor dem Ende der Vulkanisierung des Profils umfasst.

8. Verfahren nach einem der vorangehenden Ansprüche, **dadurch gekennzeichnet, dass** man nach der kompletten Vulkanisierung des Profils ein Bürsten des Profils durchführt.

9. Verfahren nach Anspruch 8, **dadurch gekennzeichnet, dass** das Bürsten dadurch erfolgt, dass man das Profil in Längsrichtung zwischen zwei benachbarten und sich in einander entgegen gesetzter Richtung drehenden Bürsten laufen lässt.

10. Verfahren nach Anspruch 9, **dadurch gekennzeichnet, dass** sich die Bürsten in der der Vorlaufrichtung des Profils zwischen den Bürsten entgegen gesetzten Richtung drehen.

11. Verfahren nach Anspruch 8, **dadurch gekennzeichnet, dass** das Bürsten dadurch erfolgt, dass man das Profil zwischen zwei Rollen durchlaufen lässt, die Profile aufweisen, die dasjenige des zu bürstenden Profils ergänzen.

12. Verfahren nach Anspruch 8, **dadurch gekennzeichnet, dass** das Bürsten dadurch erfolgt, dass man Wasserstrahlen unter hohem Druck auf das Profil spritzt.
